Europäisches Patentamt

European Patent Office

Office européen des brevets

(11) Veröffentlichungsnummer: **0 181 555**
**B1**

(12) # EUROPÄISCHE PATENTSCHRIFT

(45) Veröffentlichungstag der Patentschrift:
28.12.88

(51) Int. Cl.⁴: **H 01 G 1/147**

(21) Anmeldenummer: **85113704.2**

(22) Anmeldetag: **28.10.85**

(54) Verfahren zum Herstellen elektrischer plasmapolymerer Vielschichtkondensatoren.

(30) Priorität: **07.11.84 DE 3440703**
**15.05.85 DE 3517631**

(43) Veröffentlichungstag der Anmeldung:
**21.05.86 Patentblatt 86/21**

(45) Bekanntmachung des Hinweises auf die Patenterteilung:
**28.12.88 Patentblatt 88/52**

(84) Benannte Vertragsstaaten:
**AT CH DE FR GB IT LI SE**

(56) Entgegenhaltungen:
**EP-A- 0 041 679**
**DE-A- 2 513 509**
**GB-A- 2 106 714**
**US-A- 3 476 531**

(73) Patentinhaber: **Siemens Aktiengesellschaft Berlin und München, Wittelsbacherplatz 2, D-8000 München 2 (DE)**

(72) Erfinder: **Behn, Reinhard, Dipl.-Phys., Frasdorfer Strasse 6d, D-8000 München 90 (DE)**
Erfinder: **Wittmann, Rudolf, Dipl.-Ing., Beethovenstrasse 44, D-7920 Heidenheim (DE)**

# Beschreibung

Die Erfindung betrifft ein Verfahren zum Herstellen elektrischer plasmapolymerer Vielschichtkondensatoren bei dem zunächst auf einem Trägermaterial abwechselnd als Elektroden dienende regenerierfähige dünne Metallschichten, vorzugsweise aus Aluminium, und durch Glimmpolymerisation hergestellte Dielektrikumsschichten abgeschieden werden, bei dem dann die Elektroden in den zur Kontaktierung mit metallischen Kontaktschichten vorgesehenen Bereichen durch eine Sputterätzung von Oxidschichten befreit werden und abschliessend die Kontaktschichten an zwei gegenüberliegenden Stirnseiten des Trägermaterials und die Elektroden teilweise überlappend aufgebracht werden.

Ein derartiges Verfahren ist in der älteren Patentanmeldung P 34 39 688.8 beschrieben. Dort wird für die Kontaktschichten ein Aufbau vorgeschlagen, der aus einer CrNi-Grundschicht, einer Cu-Zwischenschicht und einer Deckschicht aus Pd, Pd/Ag oder Sn besteht, bzw. eine Schichtfolge mit einer Al-Grundschicht und einer Deckschicht aus den vorstehend genannten Metallen ohne Zwischenschicht.

Die letztgenannte Schichtfolge Al-Pd weist allerdings eine mangelnde Langzeitstabilität des Verlustfaktors auf. Darüberhinaus müssen diese Schichtfolgen für die Chip-Ausführung des Kondensators schwallötbeständig sein. Mit den vorgeschlagenen Metallen erfordert dies jedoch, um vollständiges Ablegieren zu verhindern, entsprechend dicke Metallschichten, z.B. 1,7 µm bei der Dreischichtenfolge bzw. 1,3 µm bei der Zweischichtenfolge.

Aufgabe der vorliegenden Erfindung ist es, ein Verfahren zum Herstellen elektrischer plasmapolymerer Vielschichtkondensatoren der eingangs genannten Art anzugeben, bei dem einerseits die störende Zunahme des Verlustfaktors verringert und gleichzeitig die Schwallötbeständigkeit mit verringerten Schichtdicken erreicht wird.

Diese Aufgabe wird erfindungsgemäss dadurch gelöst, dass zur Herstellung der Kontaktschichten zunächst eine Al-Schicht, anschliessend eine Ni-Schicht und abschliessend eine Pd-Schicht aufgesputtert oder aufgedampft werden.

Vorzugsweise weisen die Al- und Ni-Schichten Schichtdicken von mindestens 0,3 µm und die Pd-Schicht eine Schichtdicke von mindestens 0,09 µm auf.

Weiterhin können der Al-Schicht bei der Herstellung 1–10 Gew.-% Cu, Mg oder Si zulegiert werden.

Die Vorteile des Gegenstandes der Erfindung werden anhand der folgenden Ausführungsbeispiele näher erläutert. In der dazugehörenden Zeichnung zeigen

Fig. 1 das Schnittbild eines Vielschichtkondensators,

Fig. 2 das Verhalten des Verlustfaktors in Feuchteklima und

Fig. 3 das Verhalten des Verlustfaktors unter erhöhter Temperatur.

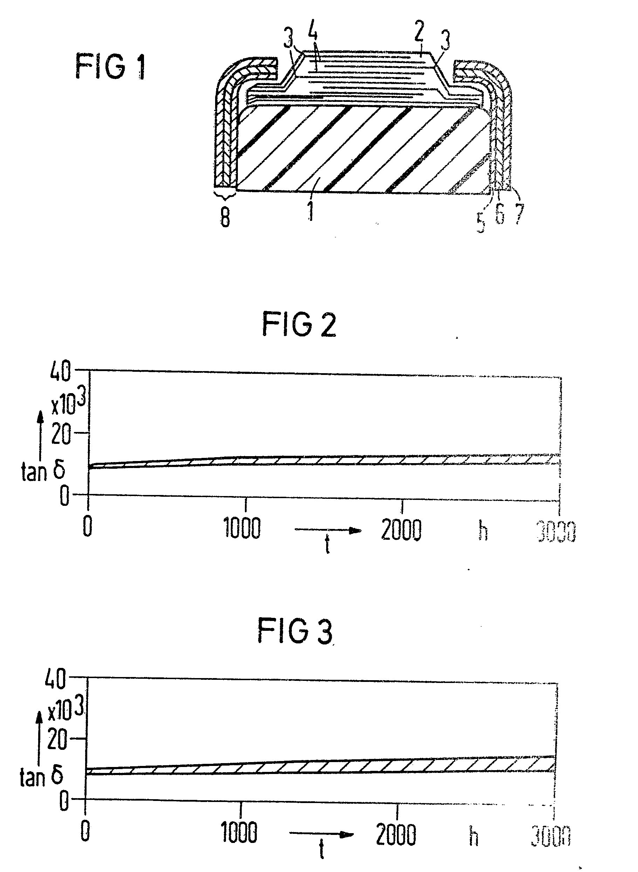

In der Fig. 1 ist das Schnittbild eines Vielschichtkondensators 2 dargestellt, der auf einem isolierenden Trägermaterial 1 angeordnet ist. Zunächst wird auf den Träger 1 der Kondensatoraufbau 2 abgeschieden, indem alternierend Metallschichten 3 und glimmpolymere Dielektrikumsschichten 4 erzeugt werden. Die Metallschichten 3 werden dann in dem Bereich, der über die Dielektrikumsschichten 4 übersteht, einer Sputterätzung unterzogen, die zur Entfernung von Oxidschichten im Anschlussbereich dient. Dann wird ohne weitere Zwischenbelüftung auf die Stirnseiten des Trägermaterials 1 und den Kontaktbereich der Aluminiumelektorden 3 zunächst eine Al-Schicht 5 als leitfähige Schicht 5 abgeschieden. Die Dicke dieser Schicht 5 beträgt mindestens 0,3 µm. Somit liegt das Aluminium der Kontaktschicht in direktem Kontakt mit dem Aluminium der Elektroden, wodurch Korrosionsprobleme und Probleme durch Interdiffusion vermieden werden. Es ist vorteilhaft, wenn der Al-Schicht 5 bei der Herstellung 1–10 Gew.-% Cu, Mg oder Si zulegiert werden, wodurch die sogenannte Thermomigration, d.h. das Abwandern von Al-Atomen, verhindert werden kann.

Auf die Aluminiumschicht 5 wird dann eine Nickelschicht 6 abgeschieden, die als Trennschicht dient und eine Dicke von mindestens 0,3 µm aufweist. Aufgrund der sehr geringen Löslichkeit des Nickels in Lotschmelzen verhindert die Nickelschicht 6 das Ablegieren der Kontaktschicht 8 beim Schwallöten. Ausserdem wirkt Nickel als Diffusionssperre gegen das Eindiffundieren von Lotmetall in die Aluminiumschicht 5 und wirkt gleichzeitig als Trennschicht zwischen dem Aluminium und der Deckschicht 7 aus Palladium. Aluminium und Palladium bilden nämlich in direktem Kontakt in Feuchteklima ein starkes Korrosionselement unter Abbau von Aluminium. Durch den Einsatz von Nickel wird dies verhindert und die Beständigkeit des Verlustfaktors verbessert.

Die Palladiumschicht 7 dient als Deckschicht zur Erhaltung der Lötfähigkeit des beschriebenen Schichtaufbaues, wobei deren Dicke mindestens 0,09 µm beträgt.

Im Vergleich zu den eingangs beschriebenen Kondensatoren mit der Schichtfolge Al-Pd, die eine Gesamtschichtdicke von mindestens 1,3 µm erfordern, um schwallötbeständige Schichten zu erhalten, ist bei der Schichtfolge Al-Ni-Pd lediglich eine Gesamtdicke von mindestens 0,7 µm ausreichend.

Für die Erzeugung der beschriebenen Schichtfolge können entweder Sputter- oder auch Bedampfungsverfahren angewendet werden, die es erlauben, ohne Zwischenbelüftung die erforderliche Sputterätzung durchzuführen und die drei beschriebenen Schichten aufzubringen.

In der Fig. 2 ist das Langzeitverhalten des Verlustfaktors tan δ (100 kHz) in Feuchteklima (92% r.F./40 °C/0 V) dargestellt.

Die Fig. 3 zeigt das Dauerversuchsverhalten des Verlustfaktors tan δ (100 kHz) bei Lagerung in 100 °C/0 V.

Den Figuren 2 und 3 ist zu entnehmen, dass der Verlustfaktor auch unter ungünstigen Umweltbedingungen nur unwesentlich ansteigt.

**Patentansprüche**

1. Verfahren zum Herstellen elektrischer plasmapolymerer Vielschichtkondensatoren bei dem zunächst auf einem Trägermaterial abwechselnd als Elektroden dienende regenerierfähig dünne Metallschichten, vorzugsweise aus Aluminium, und durch Glimmpolymerisation hergestellte Dielektrikumsschichten abgeschieden werden, bei dem dann die Elektroden in den zur Kontaktierung mit metallischen Kontaktschichten vorgesehenen Bereichen durch eine Sputterätzung von Oxidschichten befreit werden und abschliessend die Kontaktschichten an zwei gegenüberliegenden Stirnseiten des Trägermaterials und die Elektroden teilweise überlappend aufgebracht werden, dadurch gekennzeichnet, dass zur Herstellung der Kontaktschichten (8) zunächst eine Al-Schicht (5), anschliessend eine Ni-Schicht (6) und abschliessend eine Pd-Schicht (7) aufgesputtert oder aufgedampft werden.

2. Verfahren nach Anspruch 1, dadurch gekennzeichnet, dass die Al- (5) und Ni-Schicht (6) mit einer Schichtdicke von mindestens 0,3 μm und die Pd-Schicht (7) mit einer Schichtdicke von mindestens 0,09 μm abgeschieden werden.

3. Verfahren nach Anspruch 1 oder 2 dadurch gekennzeichnet, dass der Al-Schicht (5) 1–10 Gew.-% Cu, Mg, oder Si zugesetzt werden.

**Revendications**

1. Procédé pour fabriquer des condensateurs électriques multicouches à films polymérisés par plasma, selon lequel on dépose d'abord, alternativement, sur un matériau de support, de minces couches métalliques aptes à être régénérées et servant d'électrodes, de préférence en aluminium, et des couches diélectriques produites par polymérisation par effluves, selon lequel on débarrasse ensuite les électrodes de couches d'oxyde par une gravure par crépitement, dans les zones prévues pour l'établissement de con tacts avec des couches métalliques de contact, et on applique enfin les couches de contact sur deux faces d'extrémité opposées du matériau de support et de manière qu'elles recouvrent partiellement les électrodes, caractérisé en ce que, pour la réalisation des couches de contact (8), on applique, par pulvérisation ou par vaporisation, d'abord une couche d'aluminium (5), ensuite une couche de nickel (6) et enfin une couche de palladium (7).

2. Procédé selon la revendication 1, caractérisé en ce que l'on dépose les couches d'aluminium (5) et de nickel (6) avec une épaisseur de couche d'au moins 0,3 μm et on dépose la couche de palladium (7) avec une épaisseur de couche d'au moins 0,09 μm.

3. Procédé selon la revendication 1 ou 2, caractérisé en ce que l'on ajoute 1 à 10% en poids de Cu, Mg ou Si à la couche d'aluminium (5).

**Claims**

1. Method for producing electric plasma-polymeric multilayer capacitors, in which method regenerably thin metal layers, preferably of aluminium, which are used as electrodes, and dielectric layers produced by glow polymerization are initially alternately deposited on a base material, in which method oxide layers are then removed by a sputtering-type of etching process in the areas provided for bonding with metallic contact layers, and, finally, the contact layers are applied at two opposite front faces of the base material and the electrodes are applied in part in overlapping manner, characterised in that first a Al layer (5), then a Ni layer (6) and finally a Pd layer (7) are sputtered on or vapour-deposited for producing the contact layers (8).

2. Method according to Claim 1, characterised in that the Al (5) and Ni layer (6) are deposited with a layer thickness of at least 0.3 μm and the Pd layer (7) is deposited with a layer thickness of at least 0.09 μm.

3. Method according to Claim 1 or 2, characterised in that 1–10% by weight of Cu, Mg or Si are added to the Al layer (5).

FIG 1

FIG 2

FIG 3